Europäisches Patentamt

European Patent Office

Office européen des brevets

(11) Veröffentlichungsnummer: **0 313 931**
**A1**

(12) **EUROPÄISCHE PATENTANMELDUNG**

(21) Anmeldenummer: 88117044.3

(22) Anmeldetag: 13.10.88

(51) Int. Cl.⁴: **G01J 5/34** , **H01L 37/02**

(30) Priorität: 26.10.87 DE 8714248 U

(43) Veröffentlichungstag der Anmeldung:
03.05.89 Patentblatt 89/18

(84) Benannte Vertragsstaaten:
DE FR GB

(71) Anmelder: **Heimann GmbH**
**Weher Köppel 6**
**D-6200 Wiesbaden 1(DE)**

(72) Erfinder: **Quad, Reiner, Dr.**
**Beethovenstrasse 2**
**D-6204 Taunusstein(DE)**
Erfinder: **Ringeistein, Udo, Dipl.-Ing.**
**Jahnstrasse 20**
**D-6223 Lorch(DE)**

(74) Vertreter: **Mehl, Ernst, Dipl.-Ing. et al**
**Postfach 22 13 17**
**D-8000 München 22(DE)**

(54) Schaltungsanordnung für einen Infrarotdektor.

㉝ Bei einer Schaltungsanordnung für einen Infrarotdetektor mit einem Feldeffekttransistor (2) und
einem Gatewiderstand (3) soll der Strom über den
pn-Übergang des Feldeffekttransistors (2) begrenzt
werden.

In Reihe mit dem Detektorelement (1) liegt ein
strombegrenzendes Bauelement (4) vorzugsweise
ein ohmscher Widerstand, zwischen dem Gate des
Feldeffekttransistors (2) und Masse.

FIG 1

EP 0 313 931 A1

## Schaltungsanordnung für einen Infrarotdetektor

Die Erfindung betrifft eine Schaltungsanordnung für einen Infrarotdetektor mit einem Detektorelement und einem nachgeschalteten Feldeffekttransistor, dem ein Gatewiderstand zugeordnet ist.

Bei Infrarotdetektoren ist das geringe Eigenrauschen eine der wesentlichen Anforderungen. Die Rauschspannungen setzen sich aus dem Rauschen des hochohmigen Gatewiderstandes, der auch von einer Diode gebildet sein kann, und zwei Anteilen zusammen, die im Zusammenhang mit dem Feldeffekttransistor stehen. Dabei handelt es sich um das Rauschen des Gate-Leckstromes, der am Gatewiderstand zu einem Spannungsabfall führt, (Widerstandsrauschen) und um das Kanalspannungsrauschen.

Während man das Widerstandsrauschen nicht beeinflussen kann, lediglich durch Verwendung von pyroelektrischen Materialien mit hoher Kapazität das Frequenzverhalten des Rauschens verschieben kann, ist es wichtig, bei der Auswahl der verwendeten Feldeffekttransistoren auf die richtigen Parameter zu achten. So führen schon Gate-Leckströme von $I = 1pA$ zu einer merklichen Erhöhung der Rauschspannung.

Feldeffekttransistoren gehören unter den Halbleiterbauelementen zu den besonders gegenüber Spannungen empfindlichen Bauteilen. Da es nicht immer zu vermeiden ist, daß es während der Fertigung, der Lagerung und Handhabung zu starken Temperaturbelastungen der Bauteile kommt, können diese sowohl über den pyroelektrischen Effekt der verwendeten Materialien als auch über den piezoelektrischen Effekt bei auftretenden Verspannungen zur Erzeugung von Ladungen führen, die leicht Spannungen über der Gate-Durchbruchspannung hervorrufen. Ein Überschreiten dieser Gate-Durchbruchspannung kann zu Defekten am pn-Übergang des Feldeffekttransistors führen, die sich in einer Erhöhung des Gate-Leckstromes, sowohl im zeitlichen Mittel als auch durch Auftreten von Spitzen, zeigen, was zur Erhöhung des Gesamtrauschens führt.

Der Erfindung liegt die Aufgabe zugrunde, eine Schaltungsanordnung der eingangs genannten Art so auszubilden, daß die Ströme über den pn-Übergang des Feldeffekttransistors begrenzt werden, so daß keine durch Temperatureinflüsse oder mechanische Verspannungen verursachten Störungen auftreten.

Diese Aufgabe ist erfindungsgemäß dadurch gelöst, daß ein strombegrenzendes Bauelement vorhanden ist, das in Reihe mit dem Detektorelement zwischen dem Gate des Feldeffekttransistors und Masse liegt. Das strombegrenzende, also schützende Bauelement, vorzugsweise ein hochohmiger Widerstand, liegt im Stromkreis zwischen dem Gate des Feldeffekttransistors und dem Masseanschluß der Schaltung.

Die Erfindung ist nachfolgend anhand von fünf in den Fig. 1 bis 5 dargestellten Ausführungsbeispielen näher erläutert.

In den Fig. ist mit 1 ein pyroelektrisches Detektorelement bezeichnet, dem ein Feldeffekttransistor 2 nachgeschaltet ist. Dem Feldeffekttransistor 2 ist ein Gatewiderstand 3 zugeordnet. Im Stromkreis zwischen dem Gate des Feldeffekttransistors 2 und dem Masseanschluß der Schaltungsanordnung ist ein Schutzwiderstand 4 als strombegrenzendes Bauelement angeordnet. Der Schutzwiderstand 4 kann gemäß den Fig. 1 und 2 zwischen dem Detektorelement 1 und dem Gate des Feldeffekttransistors 2 und gemäß den Beispielen in den Fig. 3 und 4 auch zwischen dem Detektorelement 1 und Masse angeordnet werden.

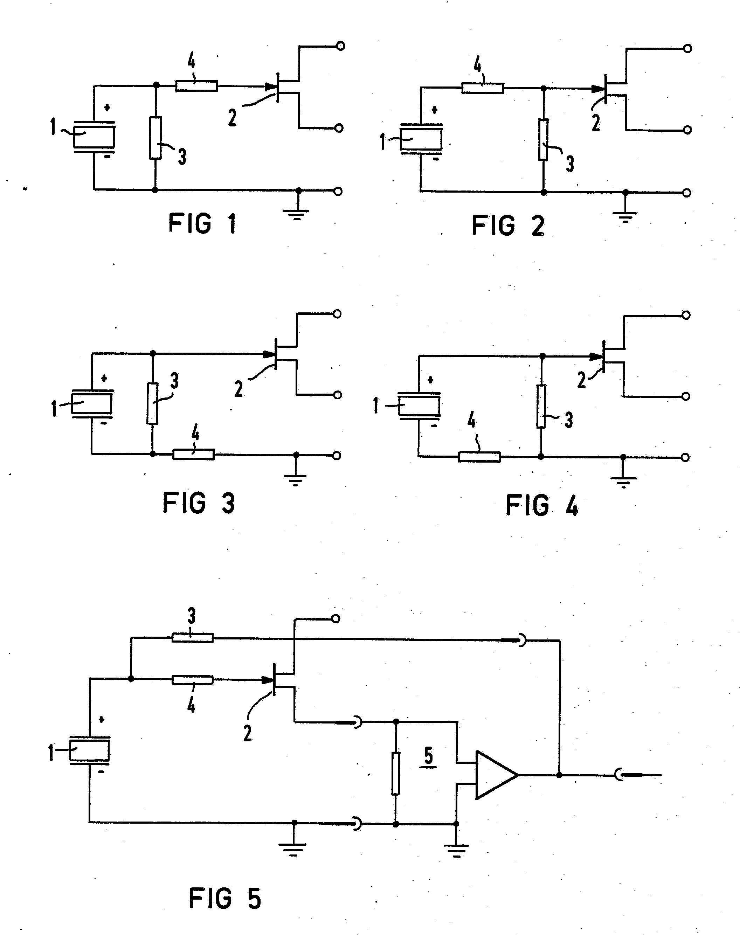

Die Fig. 5 zeigt ein Beispiel mit einem dem Feldeffekttransistor 2 nachgeschalteten Operationsverstärker 5. Hier ist der Schutzwiderstand 4 zwischen dem Detektorelement 1 und dem Gate des Feldeffekttransistors 2 angeordnet.

Der Schutzwiderstand 4 kann ein ohmscher Widerstand sein, dessen Wert möglichst hochohmig gewählt werden sollte. Er darf allerdings nicht so hochohmig sein, daß er die Funktion der Schaltung beeinträchtigt. In der Praxis hat sich gezeigt, daß die Verwendung eines Widerstandes im Bereich zwischen 100 kOhm und 100 MOhm sinnvoll ist. Man erhält aber auch bereits mit einem Widerstand von 1 kOhm eine gute Schutzwirkung.

## Ansprüche

1. Schaltungsanordnung für einen Infrarotdetektor mit einem Detektorelement (1) und einem nachgeschalteten Feldeffekttransistor (2), dem ein Gatewiderstand (3) zugeordnet ist, **gekennzeichnet durch** ein strombegrenzendes Bauelement (4), das in Reihe mit dem Detektorelement (1) zwischen dem Gate des Feldeffekttransistors (2) und Masse liegt.

2. Schaltungsanordnung nach Anspruch 1, **dadurch gekennzeichnet**, daß das strombegrenzende Bauelement (4) ein hochohmiger Widerstand ist.

3. Schaltungsanordnung nach Anspruch 2, **dadurch gekennzeichnet**, daß der hochohmige Widerstand einen Wert zwischen 100 kOhm und 100 MOhm hat.

FIG 1

FIG 2

FIG 3

FIG 4

FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | ELECTRONIC COMPONENTS AND APPLICATIONS, Band 4, Nr. 3, Mai 1982, Seiten 142-149, Eindhoven, NL; M.A. ROSE: "Pyroelectric infrared detectors" * Seite 142; Figur 2; Seite 143 * --- | 1 | G 01 J 5/34 H 01 L 37/02 |
| A | PATENT ABSTRACTS OF JAPAN, Band 9, Nr. 246 (P-393)[1969], 3. Oktober 1985; & JP-A-60 98 320 (SUMITOMO KINZOKU KOUZAN K.K.) 01-06-1985 --- | | |
| A | FR-A-2 388 262 (N.V. PHILIPS' GLOEILAMPENFABRIEKEN) --- | | |
| A | US-A-4 441 023 (A.P. DOCTOR et al.) --- | | |
| A | US-A-4 437 003 (A.P. DOCTOR) --- | | |
| A | GB-A-2 021 761 (KUREHA KAGAKU KOGYO K.K.) ----- | | |

| | RECHERCHIERTE SACHGEBIETE (Int. Cl.4) |
|---|---|
| | G 01 J G 08 B H 01 L |

Der vorliegende Recherchenbericht wurde für alle Patentansprüche erstellt

| Recherchenort | Abschlußdatum der Recherche | Prüfer |
|---|---|---|
| DEN HAAG | 01-02-1989 | VAN DEN BULCKE E. |